# EUROPEAN PATENT APPLICATION

(11) **EP 4 087 121 A1**
(43) Date of publication of application: **09.11.2022**
(21) Application number: 21172397.8
(22) Date of filing: 06.05.2021
(51) Int. Cl.: H02S 20/23, F24S 25/33

(54) **CONNECTING DEVICE**

(71) Applicant: Edilfibro S.p.A., 27040 Arena Po (PV) (IT)
(72) Inventor: MASSONI, Alberto, 27040 Arena Po, PAVIA (IT)
(74) Representative: Leihkauf, Steffen Falk

(57) **Abstract**

A connecting device (1), for connecting a photovoltaic panel (100) to a corrugated sheet (200) made of fiber cement laid on a support (300) under the corrugated sheet (200), comprising a connecting body (2), extending along a longitudinal axis (3) between a screwing end (4) and a coupling end (5); a threaded portion (6), formed at the screwing end (4); a coupling portion (7), formed at the coupling end (5); wherein the connecting device (1) is insertable into the corrugated sheet (200) through a through-hole (9) formed in the corrugated sheet (200), wherein the threaded portion (6) is screwable to the support (300), and wherein the coupling portion (7) is connectable to the photovoltaic panel (100),
and a connecting system (14), comprising at least one connecting device (1), a photovoltaic panel (100), and fastening means (15) for connecting the photovoltaic panel (100) into the at least one connecting device (1), wherein the fastening means (15) comprise a frame formed by a plurality of support bars (18), and wherein the photovoltaic panel (100) is supported by the support bars (18) of the frame.

## Description

The present invention relates to a connecting device, and in particular for connecting a photovoltaic panel to a fiber cement corrugated sheet laid on an underlying support, e.g., a purlin.

It is further known to install photovoltaic panels on such roofs, e.g., as roofs with fiber cement corrugated sheets, roofs with corrugated metal sheets, and roofs with panels, using appropriate connecting devices.

It is known that the efficiency of a photovoltaic panel is biased by its temperature. In particular, an increase in the temperature of the photovoltaic panel leads to a reduction in its efficiency.

To reduce such a negative impact on performance, it is advantageous to install photovoltaic panels on fiber cement roofs, which undergo less heating, compared to metal roofs, thus resulting in less overheating of the photovoltaic panel.

However, the installation of photovoltaic panels on fiber cement roofs is still technically critical.

In particular, the need is felt to create a connection between photovoltaic panels and fiber cement roofing which does not affect the efficiency of the photovoltaic panels.

A further requirement is to create an adjustable connection between the photovoltaic panels and the fiber cement roofing.

A further requirement is to create a connection between the photovoltaic panels and the fiber cement roofing rapidly and cost-effectively.

A further requirement is to make a connection between photovoltaic panels and fiber cement roofing which does not require the replacement of the roof for which the photovoltaic panels are intended, nor damages such a preexisting roof.

A further requirement is to create a connection between the photovoltaic panels and the fiber cement roofing which is easy to maintain and replace.

It is an object of the present invention to make available a connecting device, in particular for connecting a photovoltaic panel to a fiber cement corrugated sheet laid on an underlying support, which compensates for at least some of the critical issues highlighted in the known art.

It is a particular object of the present invention to make available a connecting device which preserves the efficiency of the photovoltaic panels.

It is a further particular object of the present invention to make available a connecting device which makes an adjustable connection between photovoltaic panels and a fiber cement roof.

It is a further particular object of the present invention to make available a connecting device which allows photovoltaic panels to be installed on a fiber cement roof in a fast and cost-effective manner.

It is a further particular object of the present invention to make available a connecting device which does not require the replacement of the roof for which the photovoltaic panels are intended, nor does it damage such a preexisting roof.

It is a further particular object of the present invention to make available a connecting device which is easy to maintain and replace.

These and other objects are achieved by means of a connecting device according to independent claim 1 and by means of a connecting system according to claim 8.

The dependent claims relate to preferred and advantageous embodiments of the present invention.

In order to better understand the invention and appreciate its advantages, some non-limiting examples of embodiments will be described below with reference to the accompanying figures, in which:

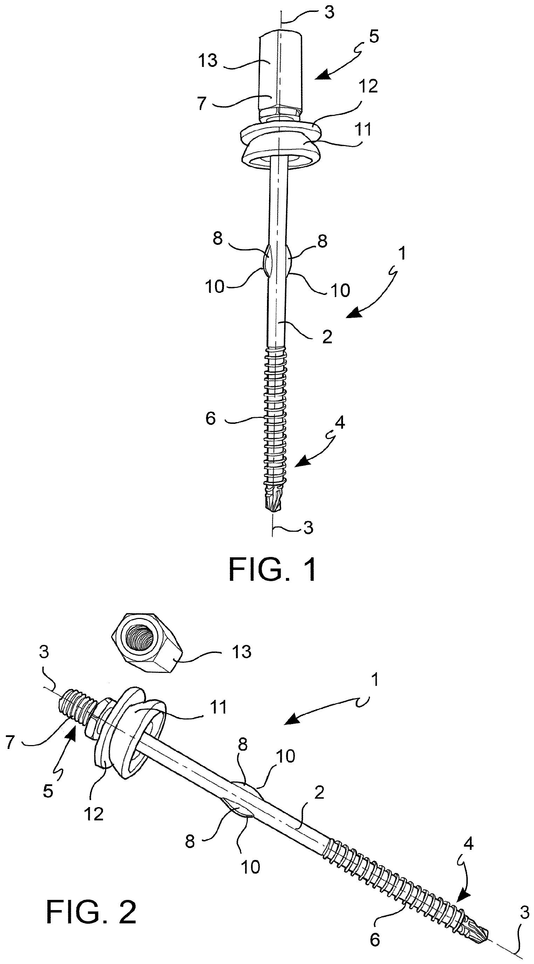

- figure 1 is a side view of a connecting device, according to an embodiment of the invention;
- figure 2 is a side view of the connecting device in figure 1 in a partially disassembled configuration;

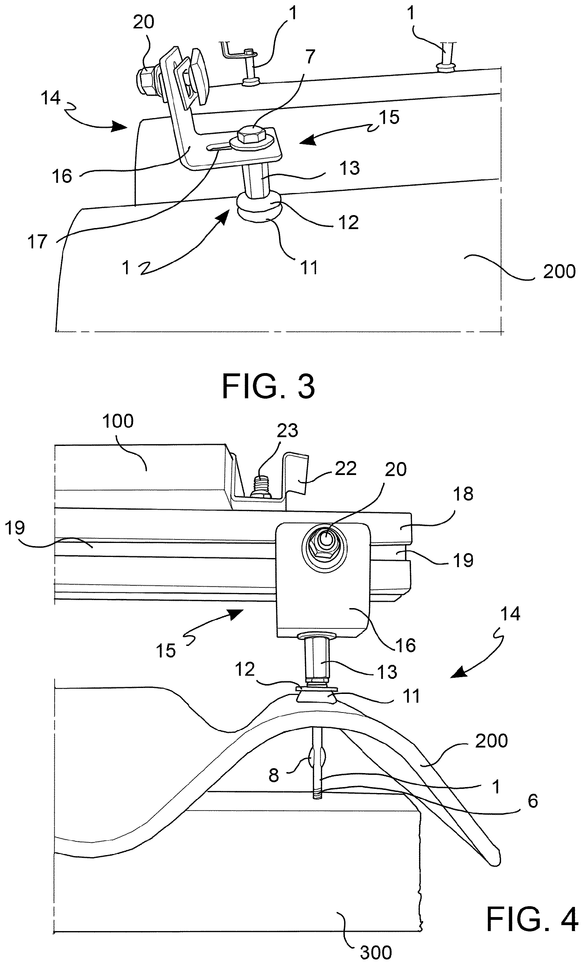

- figure 3 is a front view of a connecting system according to an embodiment of the invention;
- figure 4 is a side view of a connecting system, according to an embodiment of the invention;

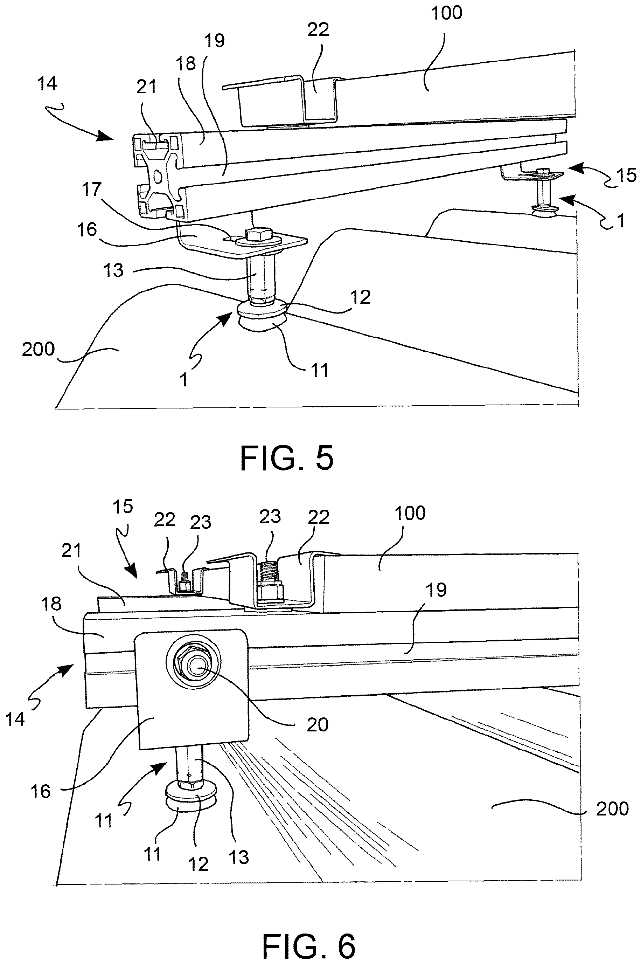

- figure 5 is a perspective view of a connecting system, according to an embodiment of the invention;
- figure 6 is a front view of the connecting system in figure 5;

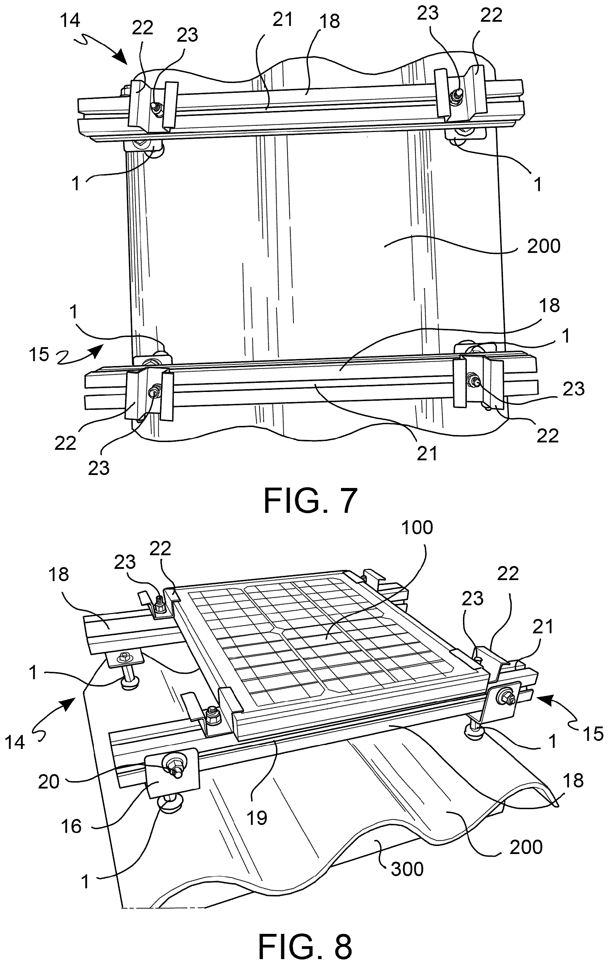

- figure 7 is an upper view of a connecting system, according to an embodiment of the invention;
- figure 8 is a perspective view of a connecting system, according to an embodiment of the invention;

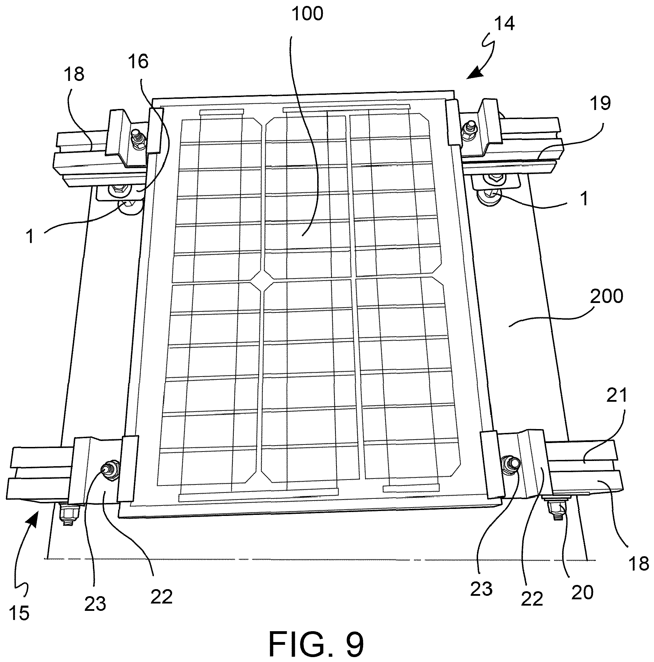

- figure 9 is an upper view of the covering system in figure 8.

### Connecting device 1

With reference to the figures, a connecting device is indicated by reference numeral 1.

The connecting device 1 is particularly adapted to make a connection between a photovoltaic panel 100 to a corrugated sheet 200 made of fiber cement laid on a support 300 under the corrugated sheet 200.

The support 300 underlying the corrugated sheet 200 is, for example, a purlin.

The connecting device 1 comprises a connecting body 2, extending along a longitudinal axis 3 between a screwing end 4 and a coupling end 5.

Furthermore, the connecting device 1 comprises a threaded portion 6 formed at the screwing end 4, and a coupling portion 7 formed at the coupling end 5.

The connecting device 1 is insertable into the corrugated sheet 200 through a through-hole 9 formed in the corrugated sheet 200.

Furthermore, the threaded portion 6 is adapted to be screwed to the support 300, and the coupling portion 7 is adapted to be connected to the photovoltaic panel 100.

Advantageously, a connecting device configured in this manner allows photovoltaic panels to be installed on a fiber cement roof without damaging or replacing the preexisting fiber cement roof.

Indeed, the connecting device object of the invention can be inserted in the preexisting roof, replacing the preexisting fastening screw with which a fiber cement sheet is connected to the underlying purlin. The connecting device is inserted through the fiber cement corrugated sheet and screwed to the purlin below, to connect the fiber cement corrugated sheet to the purlin below by means of the threaded portion, and at the same time connect the photovoltaic panel to the fiber cement corrugated sheet by means of the coupling portion.

As a further advantage, the connecting device thus configured is easy to replace and maintain.

Furthermore, the connecting device thus configured makes the connection between photovoltaic panels and fiber cement roofing rapidly and cost-effectively.

According to an embodiment, the threaded portion 6 is formed by a self-tapping thread.

Advantageously, a self-tapping thread does not require the preparation of an insertion thread by means of a drill or a tap, which is instead accomplished by the self-tapping thread itself, which thus allows a quick fastening of the connecting device and a consequent quick installation of a photovoltaic panel to a fiber cement sheet.

According to an embodiment, the connecting device 1 comprises at least one fin 8 formed on the connecting body 2 and extending in a transverse direction with respect to the longitudinal axis 3.

The at least one fin 8 is configured to ream the through-hole 9 through which the connecting device 1 is inserted.

Advantageously, the reaming performed by means of the at least one fin 8 enlarges the through-hole 9 to allow the corrugated sheet 200 to compensate for any deviations and relative movements due to temperature variations and moisture absorption and release cycles.

According to a preferred embodiment, the connecting device 1 comprises two fins 8 positioned opposite to each other relative to the connecting body 2.

According to a further embodiment, each fin 8 comprises a cutting edge 10 extending on a plane parallel to the longitudinal axis 3, and wherein the cutting edge 10 has an arc-of-ellipse-shaped profile.

According to an embodiment, the fins 8 are formed substantially at the centerline of the connecting body 2.

According to an embodiment of the invention, the connecting device comprises a gasket 11 connected to the connecting body 2.

Advantageously, the gasket 11 is configured to seal the through-hole 9, preventing the penetration of weather elements.

Specifically, the gasket 11 is configured to abut against the corrugated sheet 200 at the fastening of the threaded portion 6 to the support 300, so that the corrugated sheet 200 is interposed between the gasket 11 and the threaded portion 6.

According to an embodiment, the gasket 11 is slidingly connected relative to the connecting body 2, so that the gasket 11 and the connecting body 2 are mutually movable in the direction of the longitudinal axis 3.

Advantageously, this makes it possible to position the gasket 11 to be adjusted.

According to an embodiment, the gasket 11 has a dome shape extending in a transverse direction with respect to the longitudinal axis 3, the concavity of which faces the threaded portion 6.

Advantageously, such a configuration ensures the correct sealing of the through-hole 9.

According to an embodiment, the gasket 11 is formed of a polymeric material.

According to an embodiment, the connecting device 1 comprises an abutment element 12 configured to bias the gasket 11 against the corrugated sheet 200.

Specifically, the abutment element 12 is configured to bias the gasket 11 into abutment against the corrugated sheet 200 at the fastening of the threaded portion 6 to the support 300, so that the gasket 11 is interposed between the abutment element 12 and the corrugated sheet 200.

Advantageously, the abutment element 12 increases the sealing of the through-hole 9.

According to an embodiment, the abutment element 12 is slidingly connected relative to the connecting body 2, so that the abutment element 12 and the connecting body 2 are mutually movable in the direction of the longitudinal axis 3.

According to an embodiment, the abutment element 12 is a washer.

The washer extends in a transverse direction with respect to the longitudinal axis 3.

According to an embodiment, the gasket 11 and the abutment element 12 are slidable along the longitudinal axis 3, relative to the connecting body 2, between the coupling portion 7 and the fins 8.

According to an embodiment, the coupling portion 7 comprises a spacer 13.

The spacer 13 extends in a direction parallel to the longitudinal axis 3.

The spacer 13 is configured to distance the photovoltaic panel 100 from the fiber cement corrugated sheet 200.

Advantageously, the presence of a spacer 13 interposed between the photovoltaic panel 100 and the corrugated sheet 200 determines an air gap between the photovoltaic panel 100 and the corrugated sheet 200, which generates a "stack effect" which promotes the passage of air between the photovoltaic panel 100 and the corrugated sheet 200.

In this manner, the overheating of the photovoltaic panel 100 is reduced and its efficiency is preserved.

According to an embodiment, the spacer 13 is removably connectable to the connecting body 2 at the coupling end 5.

According to an embodiment, the coupling end 5 forms a thread, and the spacer 13 is a nut screw screwable to the thread formed on the coupling end.

Advantageously, such a type of connection is easy to connect and disconnect and is reliable.

According to an embodiment, the spacer 13 is a size "13" hexagonal spacer.

### Connecting system 14

According to a further aspect of the invention, a connecting system 14 comprises at least one connecting device 1 as previously described, a photovoltaic panel 100, and fastening means 15 for connecting the photovoltaic panel 100 to the at least one connecting device 1.

According to an embodiment, the fastening means 15 comprise a frame, formed by a plurality of support bars 18.

The photovoltaic panel 100 is supported by the support bars 18 of the frame.

According to an embodiment, each support valve 18 is connected to two connecting devices 1.

According to an embodiment, the support bars 18 are formed of steel or aluminum.

According to an embodiment, the fastening means 15 comprise at least one bracket element 16, which connects a connecting device 1 to a support bar 18.

According to an embodiment, the square element 16 forms a slot 17, and the device 1 is connected to the square element 16 through the slot 17.

Advantageously, the slot 17 allows a self-alignment of the support bars 18.

According to an embodiment, the support bar 18 forms a first track 19 extending along the length direction of the support bar 18 and facing the square element 16.

The square element 16 comprises a first fastening screw 20 at the first track 19 of the support bar 18.

The first fastening screw 20 and the first track 19 are configured to allow the adjustment of the relative positioning between the square element 16 and the support bar 18.

Advantageously, the connecting system 14 thus configured is more adaptable and maintainable.

Further advantageously, the connecting system 14 thus configured makes it possible to absorb the thermal expansions of the support bars 18.

According to an embodiment, the fastening means 15 comprise two support bars 18 arranged mutually parallel and a photovoltaic panel 100 is connected to and supported by the two support bars 18.

According to an embodiment, each support bar 18 has a quadrangular cross-section.

According to an embodiment, each support bar 18 forms a second track 21 extending in a direction parallel to the first track 19, on a wall of the support bar 18 facing the photovoltaic panel 100.

According to this embodiment, the fastening means 15 comprise at least one coupling element 22 which connects the photovoltaic panel 100 to a respective support bar 18.

The coupling element 22 comprises a second fastening screw 23 at the second track 19 of the support bar 18.

The second fastening screw 23 and the second track 21 are configured to allow the adjustment of the relative positioning between the photovoltaic panel 100 and the support bar 18.

According to an embodiment, the connecting system 14 comprises a photovoltaic panel 100 connected to two parallel support bars 18 by means of four respective coupling elements 22, wherein each of the two support bars 18 is connected to the same corrugated sheet 200 made of fiber cement by means of two connecting devices 1.

Advantageously, the connecting system 14 thus configured ensures a simple, fast and solid connection of a photovoltaic panel 100 to a corrugated fiber cement sheet 200.

Further advantageously, the connecting system 14 thus configured achieves an assembly of the photovoltaic panel 100 to the fiber cement corrugated sheet 200, with a high degree of positioning flexibility, which allows small axial deviations to be accommodated, within the tolerance limits.

### Connecting method

According to a further aspect of the invention, a method for connecting a photovoltaic panel 100 to a corrugated sheet 200 made of fiber cement laid on a support 300 under the corrugated sheet 200, provides the steps of:
- having a connecting system 14 as described above;
- inserting a plurality of connecting devices 1 as described above through respective through-holes 9 of the corrugated sheet 200;
   - screwing each connecting device 1 to the support 300;
   - fastening two mutually parallel support bars 18 to two respective connecting devices 1;
   - connecting the photovoltaic panel 100 to the two support bars 18.

Optionally, the method may provide the connection and fastening of the further components of the connecting system 14 described above.

Of course, the person skilled in the art will be able to make modifications or adaptations to the present invention without departing from the scope of the claims set forth hereinafter.

### List of references

- 1.: Connecting device
- 2.: Connecting body
- 3.: Longitudinal axis
- 4.: Screwing end
- 5.: Coupling end
- 6.: Threaded portion
- 7.: Coupling portion
- 8.: Fins
- 9.: Through-hole
- 10.: Cutting edge (fins)
- 11.: Gasket
- 12.: Abutment element (washer)
- 13.: Spacer
- 14.: Connecting system
- 15.: Fastening means
- 16.: Square element
- 17.: Slot
- 18.: Support bars
- 19.: First track
- 20.: First fastening screw
- 21.: Second track
- 22.: Coupling element
- 23.: Second fastening screw
- 100.: Photovoltaic panel
- 200.: Corrugated sheet
- 300.: Support

## Claims

1. A connecting device (1), for connecting a photovoltaic panel (100) to a corrugated sheet (200) made of fiber cement laid on a support (300) under the corrugated sheet (200), comprising:
- a connecting body (2), extending along a longitudinal axis (3) between a screwing end (4) and a coupling end (5);
- a threaded portion (6), formed at the screwing end (4);
- a coupling portion (7), formed at the coupling end (5);
wherein the connecting device (1) is insertable into the corrugated sheet (200) through a through-hole (9) formed in the corrugated sheet (200), wherein the threaded portion (6) is screwable to the support (300), and wherein the coupling portion (7) is connectable to the photovoltaic panel (100).

2. A connecting device (1) according to claim 1, wherein the threaded portion (6) is formed by a self-tapping threading.

3. A connecting device (1) according to any one of the preceding claims, comprising at least one fin (8) formed on the connecting body (2) and extending in a transverse direction with respect to the longitudinal axis (3), wherein the at least one fin (8) is configured to ream the through-hole (9) through which the connecting device (1) is inserted.

4. A connecting device (1) according to claim 3, comprising two fins (8) positioned opposite to each other relative to the connecting body (2);
and/or wherein each fin (8) comprises a cutting edge (10) extending on a plane parallel to the longitudinal axis (3), and wherein the cutting edge (10) has an arc-of-ellipse-shaped profile;
and/or wherein the fins (8) are formed substantially at the centerline of the connecting body (2).

5. A connecting device (1) according to any one of the preceding claims, comprising a gasket (11) connected to the connecting body (2),
and/or in which the gasket (11) is slidingly connected relative to the connecting body (2), so that the gasket (11) and the connecting body (2) are mutually movable in the direction of the longitudinal axis (3).

6. A connecting device (1) according to claim 5, comprising an abutment element (12) configured to bias the gasket (11) against the corrugated sheet (200),
and/or wherein the abutment element (12) is slidingly connected relative to the connecting body (2), so that the abutment element (12) and the connecting body (2) are mutually movable in the direction of the longitudinal axis (3),
and/or wherein the abutment element (12) is a washer extending in a transverse direction with respect to the longitudinal axis (3).

7. A connecting device (1) according to any one of the preceding claims, comprising a spacer (13) extending in a direction parallel to the longitudinal axis (3), wherein the spacer (13) is configured to distance the photovoltaic panel (100) from the fiber cement corrugated sheet (200),
and/or wherein the spacer (13) is removably connected to the connecting body (2) at the coupling end (5),
and/or wherein the coupling end (5) forms a thread and the spacer (13) is a nut screw screwable to the thread formed on the coupling end;
and/or the spacer (13) is a size "13" hexagonal spacer.

8. A connecting system (14), comprising at least one connecting device (1) according to any one of claims from 1 to 7, a photovoltaic panel (100) and fastening means (15) for connecting the photovoltaic panel (100) to the at least one connecting device (1).

9. A connecting system (14) according to claim 8, wherein the fastening means (15) comprise a frame formed by a plurality of support bars (18), wherein the photovoltaic panel (100) is supported by the support bars (18) of the frame.

10. A connecting system (14) according to claim 9, wherein each support bar (18) is connected to at least two connecting devices (1).

11. A connecting system (14) according to claim 9 or 10, wherein the fastening means (15) comprise at least one bracket element (16), wherein the bracket element (16) connects a connecting device (1) to a support bar (18),
and wherein, optionally, the square element (16) forms a slot (17) and the device (1) is connected to the square element (16) through the slot (17).

12. A connecting system (14) according to any one of claims 9 to 11, wherein the support bar (18) forms a first track (19) extending along the length direction of the support bar (18) and facing the square element (16),
wherein the square element (16) comprises a first fastening screw (20) at the first track (19) of the support bar (18),
and wherein the first fastening screw (20) and the first track (19) are configured to allow the adjustment of the relative positioning between the square element (16) and the support bar (18).

13. A connecting system (14) according to claim 12, wherein each support bar (18) forms a second track (21) extending in a direction parallel to the first track (19), on a wall of the support bar (18) facing the photovoltaic panel (100),
wherein the fastening means (15) comprise at least one coupling element (22) connecting the photovoltaic panel (100) to a respective support bar (18),
wherein the coupling element (22) comprises a second fastening screw (23) at the second track (19) of the support bar (18),
and wherein the second fastening screw (23) and the second track (21) are configured to allow the adjustment of the relative positioning between the photovoltaic panel (100) and the support bar (18).

14. A connecting system (14) according to claim 8, comprising a photovoltaic panel (100) connected to two parallel support bars (18) by means of four respective coupling elements (22), wherein each of the two support bars (18) is connected to a same corrugated sheet (200) made of fiber cement by means of two connecting devices (1).

15. A method for connecting a photovoltaic panel (100) to a corrugated sheet (200) made of fiber cement laid on a support (300) under the corrugated sheet (200), provides the steps of:
- arranging at least one connecting system (14) according to any one of claims 8 to 14;
- inserting a plurality of connecting devices (1) according to any one of claims 1 to 7, through respective through-holes (9) of the corrugated sheet (200);
- screwing each connecting device (1) to the support (300);
- fastening two mutually parallel support bars (18) to two respective connecting devices (1);
- connecting the photovoltaic panel (100) to the two support bars (18).
